# EUROPÄISCHE PATENTSCHRIFT

(11) **EP 0 557 694 B1**
(45) Veröffentlichungstag und Bekanntmachung des Hinweises auf die Patenterteilung: **23.04.1997**
(21) Anmeldenummer: 93100444.4
(22) Anmeldetag: 14.01.1993
(51) Int. Cl.: C08F 220/10, C08F 2/26, C08F 220/18, C08F 246/00, C09D 157/04, C09D 133/04, C09G 1/16

(54) **Beschichtungsmittel**
Coating agents
Agents de revêtement

(30) Priorität: 28.01.1992 DE 4202301
(43) Veröffentlichungstag der Anmeldung: 01.09.1993
(73) Patentinhaber: BASF Aktiengesellschaft, 67063 Ludwigshafen (DE)
(72) Erfinder: Rupaner, Robert, Dr., W-6700 Ludwigshafen (DE); Mueller, Michael Wolfgang, Dr., W-6831 Plankstadt (DE); Angel, Maximilian, Dr., W-6707 Schifferstadt (DE); Boehlke, Klaus, Dr., W-6717 Hessheim (DE)

(56) Entgegenhaltungen:
- US-A- 3 202 638
- US-A- 3 329 640
- US-A- 4 046 726

## Beschreibung

Die vorliegende Erfindung betrifft neue Beschichtungsmittel, die ein Emulsionspolymerisat enthalten, welches durch radikalisch initiierte Emulsionspolymerisation einer speziellen Monomerenmischung in Gegenwart einer Emulgatorenmischung aus Sulfobernsteinsäure-Derivaten, weiteren anionischen Emulgatoren und gewünschtenfalls nichtionischen Emulgatoren erhältlich ist. Weiterhin betrifft die Erfindung Beschichtungsmittelformulierungen mit gutem Verlauf zur Beschichtung von harten und weichen Oberflächen, insbesondere Selbstglanzemulsionen zur Fußboden- und Schuhpflege, welche diese Beschichtungsmittel enthalten.

An Beschichtungsmittel bzw. Beschichtungsmittelformulierungen speziell für harte Oberflächen, insbesondere für die Fußbodenpflege, werden eine ganze Reihe von verschiedenartigen Forderungen gestellt. Die eingesetzten Polymerisatdispersionen müssen koagulatarm und scherstabil sein. Die Beschichtungsmittelformulierungen müssen zu harten, glänzenden und polierbaren Filmen trocknen, welche über einen möglichst langen Zeitraum beständig bleiben und nur schwer anschmutzbar sind. Sie sollen unempfindlich gegenüber Detergentien, Wasser und organischen Lösungsmitteln sein. Die erzeugten Filme sollten farblos sein und dürfen vor allem nicht kleben. Es sollen gleichmäßige und streifenlose Beschichtungen erhalten werden, d.h. die Beschichtungsmittelformulierungen müssen über ein gutes Verlauf-Verhalten verfügen. Schließlich sollen die Filme auch wieder leicht entfernbar sein, um eine neue Beschichtung erzeugen zu können.

Die Aufgaben solcher Beschichtungsmittel gehen damit weit über das üblicherweise mit dem Begriff "Pflegen" assoziierte Anwendungsprofil hinaus, d.h. es geht um mehr, als nur den betrachteten Oberflächen ein gepflegtes Aussehen und Glanz zu verleihen. Im weiteren Sinn wird damit auch ein Schutz vermittelt, der zu einer höheren Lebens- und Nutzungsdauer der behandelten Gütern führt und damit einer frühzeitigen Erneuerung dieser Güter entgegenwirkt. Bodenbeläge sind im allgemeinen bevorzugt aus Polyvinylchlorid (PVC) gefertigt und deren längere Nutzung führt zu einer Reduzierung der zu entsorgenden chlorhaltigen Materialien und somit zu geringerer Umweltbelastung.

Konservierung und Desinfektion sind zunehmend wichtig werdende Aspekte von derartigen Produkten. Schmutz ist der Nährboden für Mikroorganismen aller Art. Bei der Reinigung von Bodenbelägen wird mit dem Schmutz der größte Teil von Mikroorganismen beseitigt und gleichzeitig mit der Filmbildung der weitere Zugriff auf den Untergrund verhindert. Damit tragen solche Reinigungs- und Pflegemittel zur Hygiene und Gesundheit bei. Weiterhin sollte auf Verlaufshilfsmittel in Beschichtungsmittelformulierungen, z.B. teil- oder vollständig fluorierte Tenside, und auf Vernetzungskomponenten wie Zinkverbindungen verzichtet werden.

Die US-A-4 046 726 (1) betrifft wasserunlösliche zinkhaltige Emulsionspolymerisate aus Styrol oder Styrolderivaten und anderen copolymerisierbaren Monomeren wie Methylmethacrylat, n-Butylacrylat und Methacrylsäure. Diese Emulsionspolymerisate eignen sich als Beschichtungsmittel in Fußbodenpflegemitteln. Als Emulgatoren werden die gängigsten Vertreter von anionischen und nichtionischen Tenside - z.B. auch fluorierte Tenside - aufgezählt, u.a. werden auch Bernsteinsäuredialkylester genannt. Eine Mischung aus oberflächenaktiven Bernsteinsäurederivaten und weiteren anionischen Tensiden wird jedoch nicht empfohlen.

In der EP-A-047 889 (2) werden alkalilösliche Harze auf Basis von Copolymerisaten aus monoolefinisch ungesättigten Carbonsäuren und durch Aromaten substituierten α-Olefinen und ihre Verwendung als Harzkomponente in Polymerdispersionen für Selbstglanzemulsionen zur Beschichtung von beispielsweise Fußböden beschrieben. Als Verlaufsmittel für die Selbstglanzemulsionen werden fluorierte Tenside empfohlen.

Die EP-A-006 547 (3) betrifft wäßrige Dispersionen von mit Metallionen wie Zink vernetzten Copolymerisaten. Die beschriebenen Dispersionen eignen sich als Fußbodenpoliermittel.

Die Mittel des Standes der Technik weisen allerdings noch eine Reihe von Nachteilen auf, denn bestimmte Anforderungen werden noch nicht optimal erfüllt.

Aufgabe der vorliegenden Erfindung war es daher, Beschichtungsmittel bzw. Beschichtungsmittelformulierungen bereitzustellen, die die Nachteile des Standes der Technik nicht mehr aufweisen und insbesondere eine geringere Oberflächenklebrigkeit und ein besseres Verlauf-Verhalten zeigen. Dabei soll weitgehend auf verlaufsfördernde Additive, z.B. teil- oder perfluorierte Tenside oder Silicontenside, und auf Zinkverbindungen verzichtet werden.

Demgemäß wurde ein Beschichtungsmittel gefunden, das ein Emulsionspolymerisat enthält, welches durch radikalisch initiierte Emulsionspolymerisation einer Monomerenmischung aus
A) 15 bis 60 Gew.-% eines Acrylsäureesters mit einer primären oder sekundären C₁- bis C₁₈-Alkylgruppe, welche durch Sauerstoffatome unterbrochen sein kann, als Alkoholrest (Monomer I), eines Methacrylsäureesters mit einer primären oder sekundären C₅- bis C₁₈-Alkylgruppe, welche durch Sauerstoffatome unterbrochen sein kann, als Alkoholrest (Monomer II) oder einer Mischung solcher Monomeren,
B) 15 bis 50 Gew.-% eines Acrylsäure- oder Methacrylsäureesters mit einer tertiären C₄- bis C₈-Alkylgruppe als Alkoholrest (Monomer III), eines Acrylsäure- oder Methacrylsäureesters mit einem aus einer alicyclischen oder aromatischen Gruppe bestehenden oder eine alicyclische oder aromatische Gruppe enthaltenden C₆- bis C₁₂-Alkoholrest (Monomer IV), eines Methacrylsäureesters mit einer primären oder sekundären C₁- bis C₄-Alkylgruppe als Alkoholrest (Monomer V), Acrylsäure- oder Methacrylsäurenitril (Monomer VI), Acrylsäure- oder Methacrylsäureamid (Monomer VII), eines Vinylesters einer C₁- bis C₈-Carbonsäure (Monomer VIII) oder einer Mischung solcher Monomeren,
C) 10 bis 50 Gew.-% eines oder mehrerer C₈- bis C₁₂-Vinylaromaten (Monomer IX),
D) 8 bis 20 Gew.-% einer olefinisch ungesättigten C₃- bis C₅-Mono- oder C₄- bis C₈-Dicarbonsäure oder deren Anhydride (Monomer X) oder einer Mischung solcher Monomeren und
E) 0 bis 5 Gew.-% weiterer copolymerisierbarer Monomerer mit funktionellen Gruppen (Monomere XI)
in Gegenwart von 0,1 bis 10 Gew.-%, bezogen auf die Monomerenmischung aus A bis E, einer Emulgatorenmischung aus
(a) einem oder mehreren Sulfobernsteinsäure-Derivaten der allgemeinen Formel I 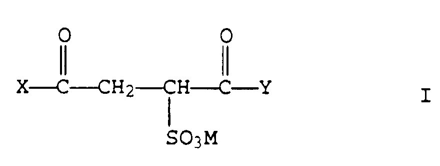 in der
   - M: Alkalimetall oder Ammonium, welches durch ein bis vier C₁- bis C₄-Alkyl- oder C₁- bis C₄-Hydroxyalkylgruppen substituiert sein kann, bezeichnet und
   - X und Y: gleich oder verschieden sind und jeweils für O-(CₙH₂ₙO)ₘ-R, OM oder NHR stehen, wobei wenigstens einer der Reste X oder Y für O-(CₙH₂ₙO)ₘ-R oder NHR steht, R C₆- bis C₁₈-Alkyl, C₆- bis C₁₈-Alkenyl, C₅-bis C₈-Cycloalkyl, (C₁- bis C₁₂-Alkyl) aryl oder Phenyl bedeutet, n für eine Zahl von 2 bis 4 und m für eine Zahl von 0 bis 30 steht,
(b) 0,1 bis 10 Gew.-Teilen pro Gew.-Teil (a) mindestens eines weiteren anionischen Emulgators und
(c) 0 bis 10 Gew.-Teilen pro Gew.-Teil (a) eines oder mehrerer nichtionischer Emulgatoren
erhältlich ist.

Das Emulsionspolymerisat ist aus verschiedenartigen Monomertypen aufgebaut, nämlich aus "weichmachenden" Monomeren A, "hartmachenden" Monomeren B, "hydrophoben" Monomeren C, säurehaltigen Monomeren D und gewünschtenfalls funktionalisierten Monomeren E; letztere haben die Aufgaben, das Emulsionspolymerisat je nach Anforderung geringfügig zu modifizieren - beispielsweise durch Vernetzung - ohne jedoch die Grundeigenschaften zu ändern.

Unter den Begriffen "hartmachende" und "weichmachende" Monomere ist hierbei der Effekt zu verstehen, daß der Zusatz von entsprechenden Monomeren den Elastizitätsmodul bzw. die Glasübergangstemperatur des Polymeren anhebt bzw. absenkt. Unter dem Begriff "hydrophobe" Monomere wird verstanden, daß die entsprechenden Homopolymere weniger durch Wasser anquellbar sind als die Homopolymere der anderen Monomeren und mit deren Copolymerisation der ausgeprägten Quellbarkeit, die dem Polymerisat durch die Mitverwendung der säurehaltigen und sehr hydrophilen Monomeren verliehen wird, entgegengewirkt wird. "Hartmachende" und "weichmachende" Monomere werden in einem ausbalanciertem Verhältnis eingesetzt, um die gewünschte Glasübergangstemperatur und insbesondere die Mindestfilmbildetemperatur zu erhalten.

Als Monomere I eignen sich vor allem Methylacrylat, Ethylacrylat, n-Propylacrylat, iso-Propylacrylat, n-Butylacrylat, iso-Butylacrylat, sec.-Butylacrylat, n-Amylacrylat, isoAmylacrylat, n-Hexylacrylat, 2-Ethylhexylacrylat, n-Octylacrylat, 3,5,5-Trimethylhexylacrylat, n-Decylacrylat, n-Dodecylacrylat, iso-Tridecylacrylat, Cetylacrylat, Octadecylacrylat und n-Butoxyethylacrylat. Hiervon ist n-Butylacrylat besonders gut geeignet.

Als Monomere II kommen insbesondere n-Amylmethacrylat, iso-Amylmethacrylat, n-Hexylmethacrylat, 2-Ethylbutylmethacrylat, 2-Ethylhexylmethacrylat, n-Octylmethacrylat, 3,5,5-Tri-methylhexylmethacrylat, n-Decylmethacrylat, n-Dodecylmethacrylat, iso-Tridecylmethacrylat, Octadecylmethacrylat und Butoxyethylmethacrylat in Betracht.

Als Monomere III dienen vor allem tert.-Butylacrylat oder -methacrylat, tert.-Amylacrylat oder - methacrylat, (1,1-Dimethylbutyl)acrylat oder -methacrylat und (1,1-Dimethylhexyl)acrylat oder -methacrylat.

Als Monomere IV eignen sich insbesondere Isobornylacrylat oder -methacrylat, Cyclohexylacrylat oder -methacrylat, Benzylacrylat oder -methacrylat, Phenylacrylat oder -methacrylat.

Als Monomere V kommen vor allem Methylmethacrylat, daneben aber auch Ethylmethacrylat, n-Propylmethacrylat, iso-Propylmethacrylat, n-Butylmethacrylat, iso-Butylmethacrylat oder sec.-Butylmethacrylat in Betracht.

Als Monomere VIII dienen insbesondere Vinylformiat, Vinylacetat, Vinylpropionat, Vinylbutyrat, Vinylhexanoat, Vinyloctanoat oder Vinyl-2-ethylhexanoat.

Als Monomere IX eignen sich vor allem Styrol, α-Methylstyrol, 2-, 3- oder 4-Vinyltoluol, 2,4-Dimethylstyrol oder 1-Phenylpropen. Hiervon ist Styrol besonders gut geeignet.

Als Monomere X dienen vor allem Acrylsäure, Methacrylsäure, Crotonsäure, Itaconsäure, Citraconsäure, Fumarsäure, Maleinsäure oder Maleinsäureanhydrid. Hiervon sind Acrylsäure und Methacrylsäure besonders gut geeignet.

Gewünschtenfalls können weitere funktionalisierte Monomere XI eingesetzt werden, um beispielsweise Vernetzung im Polymerisat oder bei dessen Verfilmung zu erhalten oder auch nur um ein verbessertes Haftvermögen an ein Substrat zu erzielen. Beispiele für derartige, meist hydrophile Sübstanzen, die neben einer radikalisch polymerisierbaren Doppelbindung über mindestens eine weitere funktionelle Gruppe verfügen, sind Monomere mit Amidogruppen, einschließlich N-substituierter Derivate, wie Alkoxyalkylamido- und Alkylolamido (meth)acrylate, (Meth)Acrylsäureamidoglykolsäure sowie deren Ester und/oder Ether, mit weiteren olefinischen Doppelbindungen, z.B. Divinylbenzol, Butandioldi(meth)acrylat oder (Meth)allyl(meth)acrylat, und mit Hydroxyl-, Amino-, Epoxy-, Oxazolinidyl-, Oxazinyl- oder Ureidogruppen in der Seitenkette.

In einer bevorzugten Ausführungsform setzt man eine Monomerenmischung aus
A) 15 bis 60 Gew.-% n-Butylacrylat,
B) 15 bis 50 Gew.-% Methylmethacrylat,
C) 10 bis 50 Gew.-% Styrol,
D) 8 bis 20 Gew.-% Acrylsäure oder Methacrylsäure oder einer Mischung hieraus und
E) 0 bis 5 Gew.-% weiterer copolymerisierbarer Monomerer mit funktionellen Gruppen ein.

Man setzt die Monomerkomponenten A bis E vorzugsweise im Gewichtsverhältnis 20 bis 50 Gew.-% A, 20 bis 45 Gew.-% B, 15 bis 45 Gew.-% C, 10 bis 18 Gew.-% D und 0 bis 3 Gew.-% E, insbesondere im Gewichtsverhältnis 23 bis 43 Gew.-% A, 25 bis 40 Gew.-% B, 20 bis 40 Gew.-% C, 12 bis 15 Gew.-% D und 0 bis 2 Gew.-% E ein.

Bei der Emulgatorkomponente (a) der allgemeinen Formel I bezeichnet das Kation M vorzugsweise Ammonium, Kalium oder insbesondere Natrium, daneben aber auch Lithium, Trimethylammonium, Triethylammonium, Triethylammonium, Tri-n-butylammonium, Triethanolammonium oder Triisopropanolammonium.

Der Rest R in der allgemeinen Formel I bedeutet insbesondere n-Hexyl, n-Octyl, 2-Ethylhexyl, n-Nonyl, 3,5,5-Trimethylhexyl, n-Decyl, n-Dodecyl, n-Tridecyl, iso-Tridecyl, Tetradecyl, Cetyl, Stearyl (Octadecyl), Oleyl, Cyclohexyl, Methylcyclohexyl, o-, m- oder p-Tolyl, C₅- bis C₁₂-Alkylphenyl wie (2-Ethylhexyl)phenyl, n-Octylphenyl, n-Nonylphenyl, iso-Nonylphenyl, n-Decylphenyl oder n-Dodecylphenyl sowie unsubstituiertes Phenyl.

Sind in die Verbindungen I Alkylenoxideinheiten eingebaut, steht n vorzugsweise für 2 (Ethylenoxid) oder 3 (Propylenoxid), daneben aber auch für 4 (Butylenoxid). Der Alkoxylierungsgrad m liegt vorzugsweise bei 0 bis 15, insbesondere 0 bis 7. Bevorzugt werden jedoch Verbindungen I ohne Alkylenoxideinheiten (m = 0).

In einer bevorzugten Ausführungsform setzt man als Emulgatorkomponente (a) das Alkalimetallsalz eines α-Sulfobernsteinsäure-di(C₆- bis C₁₈-alkyl)esters oder das Dialkalimetallsalz eines N-(C₆- bis C₁₈-Alkyl)sulfosuccinamats (N-Alkyl-Derivat eines Sulfobernsteinsäurehalbamids) ein.

Als Emulgatorkomponente (b) kommen vor allem Alkalimetall- oder Ammoniumsalze von C₆- bis C₁₈-Alkyl-, (C₆- bis C₁₈-Alkyl)aryl- oder α-Methylester-sulfonaten,-sulfaten oder -polyethersulfaten sowie den entsprechenden Phosphonaten oder Phosphaten oder C₆- bis C₁₈-Alkyl-diphenyloxid-disulfonaten oder Mischungen hieraus in Betracht. Unter dem Begriff der Polyethersulfate werden vom Fachmann die bekannten sulfatierten Derivate der Additionsprodukte von Alkoholen oder Phenolen an Ethylenoxid, Propylenoxid oder Butylenoxid verstanden, wobei ein Additionsgrad von bis zu 50 Einheiten, insbesondere bis zu 30 Einheiten üblich ist.

Besonders bevorzugte Emulgatorkomponenten (b) sind ethoxylierte Alkalimetall-C₈- bis C₁₈-Alkylethersulfate, z.B. Natrium-Laurylethersulfat. Der Ethoxylierungsgrad wird hierbei niedrig gewählt, etwa im Bereich von 1 bis 7, insbesondere 2 bis 4. Weiterhin werden C₁₀- bis C₁₄-Fettalkohol-Derivate bevorzugt.

Als weiterhin besonders bevorzugte Emulgatoren (b) finden solche Systeme Verwendung, die Vorteile in ökologischen Aspekten aufweisen, d.h. explizit Emulgatoren, die nicht über verzweigte C-Ketten verfügen und daher leicht eliminierbar bzw. biologisch abbaubar sind (insbesondere Fettalkohol-Derivate), die nicht auf Basis von ethoxylierten Phenolen, deren Metabolite als fischtoxisch gelten, aufgebaut sind und die nicht mit Formaldehyd konserviert sind bzw. Formaldehyd während der Polymerisation freisetzen.

Als fakultative Emulgatorkomponente (c) können vor allem ethoxylierte C₈- bis c₁₈-Fettsäuren, C₈- bis C₁₈-Fettalkohole, C₈- bis C₁₈-Fettamine, C₈- bis C₁₈-Fettsäureamide, C₆-bis C₁₈-Alkylphenole, Ethylenoxid-Propylenoxid-Blockcopolymerisate oder C₆- bis C₁₈-Alkyl(poly)glykoside oder Mischungen hieraus eingesetzt werden.

Die Emulgatorenmischung aus (a), (b) und (c) wird in einer Menge von vorzugsweise 0,5 bis 7 Gew.-%, insbesondere 1 bis 5 Gew.-%, bezogen auf die Monomerenmischung aus A bis E, eingesetzt. Bei der Mischung der einzelnen Emulgatorkomponenten verwendet man vorzugsweise 0,3 bis 3 Gew.-Teile (b) pro Gew.-Teil (a), insbesondere 0,5 bis 2 Gew.-Teile (b) pro Gew.-Teil (a). Ganz besonders bevorzugt ist dabei ein Gew.-Verhältnis von ca. 1:1 der Emulgatoren (a) und (b) in einer Gesamtmenge von 2 bis 4 Gew.-%, wobei Polymerdispersionen erhalten werden, deren mittlere Teilchengrößen im zu bevorzugenden Bereich von 60 bis 100 nm, insbesondere um 80 nm, und deren Lichtdurchlässigkeit über 90 % liegen.

Die Gesamtmenge der eingesetzten Emulgatorenmischung ist abhängig von der angestrebten Teilchengröße der Polymerisatpartikel. Die Emulgatorenmischung kann vollständig dem Monomerenzulauf zugegeben werden. Bevorzugt wird allerdings zur Regelung der Teilchenzahl und damit der Steuerung der Größe der entsprechenden Polymerpartikel eine Aufteilung in vorgelegter und mit der Monomereemulsion zufließender Menge an Emulgiermittel. Die eingesetzte Menge ist als Summe aller Emulgatoren zu versehen und kann beliebig auf Vorlage, Monomerzulauf oder gegebenenfalls zum nachträglichen Stabilisieren verwendet werden.

Die beschriebenen Emulsionspolymerisate werden in Form von wäßrigen Dispersionen in an sich bekannter Weise durch Emulsionspolymerisation in wäßrigem Medium in Gegenwart eines freie Radikale lieferenden sauerstoff- oder stickstoffhaltigen Initiators hergestellt. Derartige Initiatoren sind allgemein bekannt und können anorganischer oder organischer Natur sein. Sie werden thermisch zersetzt oder in Kombination mit Reduktionsmitteln als Redoxinitiatoren verwendet. Von den ersteren sind vor allem Persulfate, Alkaliperoxide oder Wasserstoffperoxid, von den letzteren beispielsweise tert.-Butylhydroperoxid, Benzoylperoxid oder Azoisobutyronitril zu nennen. Als Reduktionsmittel sei Ascorbinsäure in Gegenwart geringer Mengen an Eisen-(II)-salzen, Natriumsulfoxylat oder Kaliumhydrogensulfit genannt.

Besonders geeignet zur Herstellung feinteiliger Dispersionen sind jedoch Alkalimetallsalze oder das Ammoniumsalz der Peroxodischwefelsäure, wie zum Beispiel Natriumperoxodisulfat, das in der Regel in Mengen von ca. 1 bis 3 Gew.-%, bezogen auf die Gesamtmenge der Monomeren, eingesetzt wird. Die Temperatur, bei der die Polymerisation durchgeführt wird, sollte zwischen 60 und 95°C liegen; besonders bevorzugt sind allerdings Temperaturen zwischen 80 und 90°C. Die Verwendung von relativ hohen Mengen an zerfallendem Initiator führt zu gut scherstabilen Dispersionen, die bei pH-Werten von etwa 7 bis 10 trotz des hohen Anteils an säurehaltigen Monomeren D nur eine geringe Zunahme in der Viskosität zeigen.

Die Emulsionspolymerisation wird aufgrund der Einfachheit der Reaktionsführung und -kontrolle in vorteilhafter Weise durch eine kontinuierliche Zufuhr einer Monomeremulsion und getrennt hiervon einer Initiatorlösung in einen Reaktionsbehälter zur laufenden Polymerisation durchgeführt. Dabei kann durch zeitlich versetzte Zufuhr unterschiedlicher Teilmonomeremulsionschargen bewußt ein mehrschaliger Aufbau erzwungen werden, aber bevorzugt wird die kontinuierliche Zufuhr einer einzigen Monomeremulsion, welche alle polymerisierbaren Monomeren enthält. Ein hoher Anteil an gut wasserlöslichen Monomeren führt zu hydrophilen Oligomeren und Polymeren, welche an Latexteilchen adsorbiert bzw. gepropft werden und sich damit an der äußeren Schicht der Latexteilchen anreichern und eine heterogene Teilchenmorphologie verursachen. Dieser Effekt kann durch Verwendung von teilneutralisierten Monomeremulsionen noch verstärkt werden.

Die Monomeremulsion besteht aus einem Gemisch von verschiedenen Monomeren, Wasser und einem Emulgiermittelsystem, welches erfindungsgemäß ein Gemisch aus mehreren Tensiden darstellt und auch die Stabilität der Emulsion garantiert. Die Monomerenmischung ist so gewählt, daß das nach der Polymerisation erhaltene, bei Raumtemperatur getrocknete und verfilmte nicht weichgemachte Polymer eine Glasübergangstemperatur und eine Mindestfilmbildetemperatur von jeweils ca. 30 bis 100°C, vorzugsweise von 40 bis 80°C, insbesondere von 50 bis 70°C, aufweist und eine ausreichende Anzahl von Carboxylatgruppen enthält, um über gute Adhäsion zum Untergrund zu verfügen.

Bei der Emulsionspolymerisation wird das Verhältnis der Monomeren zum Wasser derart eingestellt, daß nach der Polymerisation Feststoffanteile von ca. 10 bis 60 Gew.-% erhalten werden. Bevorzugt wird jedoch ein Feststoffanteil von ca. 25 bis 50 Gew.-%.

Gegenstand der vorliegenden Erfindung ist ebenfalls ein Verfahren zur Herstellung eines als Beschichtungsmittel geeigneten Emulsionspolymerisates, welches dadurch gekennzeichnet ist, daß man eine Monomerenmischung aus
A) 15 bis 60 Gew.-% eines Acrylsäureesters mit einer primären oder sekundären C₁- bis C₁₈-Alkylgruppe, welche durch Sauerstoffatome unterbrochen sein kann, als Alkoholrest (Monomer I), eines Methacrylsäureesters mit einer primären oder sekundären C₅- bis C₁₈-Alkylgruppe, welche durch Sauerstoffatome unterbrochen sein kann, als Alkoholrest (Monomer II) oder einer Mischung solcher Monomeren,
B) 15 bis 50 Gew.-% eines Acrylsäure- oder Methacrylsäureesters mit einer tertiären C₄- bis C₈-Alkylgruppe als Alkoholrest (Monomer III), eines Acrylsäure- oder Methacrylsäureesters mit einem aus einer alicyclischen oder aromatischen Gruppe bestehenden oder eine alicyclische oder aromatische Gruppe enthaltenden C₆- bis C₁₂-Alkoholrest (Monomer IV), eines Methacrylsäureesters mit einer primären oder sekundären C₁- bis C₄-Alkylgruppe als Alkoholrest (Monomer V), Acrylsäure- oder Methacrylsäurenitril (Monomer VI), Acrylsäure- oder Methacrylsäureamid (Monomer VII), eines Vinylesters einer C₁- bis C₈-Carbonsäure (Monomer VIII) oder einer Mischung solcher Monomeren,
C) 10 bis 50 Gew.-% eines oder mehrerer C₈- bis C₁₂-Vinylaromaten (Monomer IX),
D) 8 bis 20 Gew.-% einer olefinisch ungesättigten C₃- bis C₅-Mono- oder C₄- bis C₈-Dicarbonsäure oder deren Anhydride (Monomer X) oder einer Mischung solcher Monomeren und
E) 0 bis 5 Gew.-% weiterer copolymerisierbarer Monomerer mit funktionellen Gruppen (Monomere XI)
in Gegenwart von 0,1 bis 10 Gew.-%, bezogen auf die Monomerenmischung aus A bis E, einer Emulgatorenmischung aus
(a) einem oder mehreren Sulfobernsteinsäure-Derivaten der allgemeinen Formel I 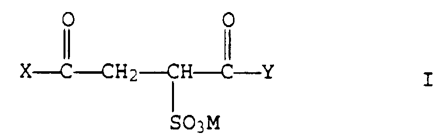 in der
   - M: Alkalimetall oder Ammonium, welches durch ein bis vier C₁- bis C₄-Alkyl- oder C₁- bis C₄-Hydroxyalkylgruppen substituiert sein kann, bezeichnet und
   - X und Y: gleich oder verschieden sind und jeweils für O-(CₙH₂ₙO)ₘ-R, OM oder NHR stehen, wobei wenigstens einer der Reste X oder Y für O-(CₙH₂ₙO)ₘ-R oder NHR steht, R C₆- bis C₁₈-Alkyl, C₆- bis C₁₈-Alkenyl, C₅-bis C₈-Cycloalkyl, (C₁- bis C₁₂-Alkyl) aryl oder Phenyl bedeutet, n für eine Zahl von 2 bis 4 und m für eine Zahl von 0 bis 30 steht,
(b) 0,1 bis 10 Gew.-Teilen pro Gew.-Teil (a) mindestens eines weiteren anionischen Emulgators und
(c) 0 bis 10 Gew.-Teilen pro Gew.-Teil (a) eines oder mehrerer nichtionischer Emulgatoren
radikalisch initiiert polymerisiert.

Weiterhin ist Gegenstand der vorliegenden Erfindung eine Beschichtungsmittelformulierung mit gutem Verlauf zur Beschichtung von harten Oberflächen, welche neben den hierfür üblichen Bestandteilen 1 bis 50 Gew.-%, vorzugsweise 2 bis 30 Gew.-%, insbesondere 5 bis 25 Gew.-%, bezogen auf den Polymerisatgehalt, eines oder mehrerer der erfindungsgemäßen Beschichtungsmittel enthält.

Die erfindungsgemäßen Beschichtungsformulierungen eignen sich in hervorragender Weise als Selbstglanzemulsionen zur Fußbodenpflege, hauptsächlich von Böden aus Polyvinylchlorid, Linoleum, Kautschuk, Parkett oder Stein. Sie können aber auch in vorteilhafter Weise zur Beschichtung von anderen harten Oberflächen verwendet werden, hierfür kommen generell Kunststoffoberflächen und Kunststoffolien, Holz, Keramikoberflächen wie Kacheln und Fliesen, Steinoberflächen, Metalloberflächen und verwandte Materialien in Betracht. Insbesondere im Bausektor finden sich zahlreiche Anwendungen, z.B. bei Ziegeln, Steinen, Mauerwerk, Zement- oder Betonoberflächen. Die harten Oberflächen können vorzugsweise glatt oder auch rauh und porös sein.

Mit den erfindungsgemäßen Beschichtungsmittelformulierungen können in vorteilhafter Weise auch weiche Oberflächen zu Pflegezwecken beschichtet werden. Hierzu zählen vor allem Leder und Kunstleder bei Schuhen.

Unter Beschichtungsmittelformulierungen sind die gebrauchsfertigen üblicherweise wäßrigen Abmischungen zu verstehen, die schon die üblichen Hilfsmittel und Zusatzstoffe enthalten. Beschichtungsmittel dagegen bezeichnen entweder die Emulsionspolymerisate selber, welche den Hauptbestandteil oder den wirksamen Bestandteil der Beschichtungsmittelformulierungen darstellen, oder wäßrige Dispersionen dieser Emulsionspolymerisate, welche schon einen Teil der für die spätere Beschichtungsanwendung notwendigen Hilfsmittel und Zusatzstoffen mit enthalten können.

Unter Verwendung der beschriebenen Polymerdispersionen können Beschichtungsmittelformulierungen abgemischt werden, die im Grundrezept schon bekannt sind und üblicherweise folgende Zusammensetzung aufweisen:

| | |
|---|---|
| 2 bis 70 Gew.-% | der Emulsionspolymerisat-Dispersion |
| 1 bis 40 Gew.-% | einer Wachs-Dispersion |
| 0 bis 40 Gew.-% | eines alkalilöslichen Harzes |
| 0 bis 10 Gew.-% | eines temporären Weichmachers |
| 0 bis 5 Gew.-% | eines permanenten Weichmachers |
| 0 bis 1 Gew.-% | eines Verlaufshilfsmittels. |

Desweiteren können je nach Anwendung und Gebrauch zusätzlich in geringen Mengen enthalten sein:
- Konservierungs- und Stabilisierungsstoffe
- Duftstoffe oder Parfüm
- Farbstoffe und/oder Pigmente
- Schaumregulierer
- Metallionen, zugegeben in Form von löslichen oder sich auflösenden Salzen oder Komplexen.

Die Formulierungen werden üblicherweise mit wäßrigem Ammoniak auf einem pH-Wert von 6 bis 10, insbesondere 7 bis 9 eingestellt. Der Gesamtfeststoffgehalt der Formulierungen beträgt in der Regel ca. 1 bis 50 Gew.-%, insbesondere ca. 15 bis 20 Gew.-%.

Das in den Formulierungen verwendete Wachs wird in der Regel getrennt emulgiert und als Wachsemulsion zugesetzt. Besonders bevorzugt für die erfindungsgemäßen Beschichtungsmittelsformulierungen werden sauerstoffhaltige Polyethylen-Wachse mit einem mittleren Molekulargewicht von ca. 8 000 g/mol (viskosimetrisches Zahlenmittel), einer Schmelzviskosität von ca. 4 500 mm²/s (bei 140°C) und einer mittleren Erweichungstemperatur von 125 bis 135°C (DSC) eingesetzt. Derartige Wachsemulsionen können unter Verwendung eines beliebigen anionischen oder nichtionischen Dispergiermittels hergestellt werden, verfügen über einen Polymeranteil ca. 30 bis 40 Gew.-%, einen pH-Wert von 8 bis 10 und werden der Formulierung in einer Menge von weniger als 35 Gew.-%, bevorzugt in einer Menge von 5 bis 15 Gew.-% zugesetzt. Als für die erfindungsgemäßen Beschichtungsmittelzubereitungen geeignete Wachsdispersion aus einem sauerstoffhaltiges Polyethylen-Wachs ist beispielsweise Poligen® WE1 (Hersteller: BASF) zu nennen.

Es kann sich weiterhin als erforderlich herausstellen, zusätzlich ein alkalilösliches Harz den Beschichtungsmittelformulierungen zuzusetzen. Diese meist säurehaltigen Harze können gegebenenfalls auch in partiell neutralisierter Form verwendet werden.

Beispiele für derartige alkalilösliche Harze sind Schellack, Manilagum, Lobagum sowie alkalilösliche Alkydharze, die im wesentlichen Polyester aliphatischer Dicarbonsäuren mit aliphatischen mehrwertigen Alkoholen, welche mit C₈- bis C₁₈-Fettsäure modifiziert sein können, darstellen, Glycerinester von C₈- bis C₁₈-Fettsäuren und Harzsäuren, beispielsweise Abietinsäure oder Kolophonium. Insbesondere eignen sich jedoch Additionscopolymerisate aus olefinisch ungesättigten Säuren und Vinylaromaten, z.B. Copolymerisate aus Acrylsäure, Methacrylsäure und/oder Maleinsäureanhydrid mit Styrol.

Die wäßrigen Formulierungen können bis zu ungefähr 75 Gew.-% (bez. auf die Menge des Emulsionspolymerisats) eines Weichmachers enthalten, wenn es für einen besonderen Anwendungszweck notwendig oder vorteilhaft ist, über eine niedrige Filmbildetemperatur zu verfügen. 15 bis 55 Gew.-% (bez. auf die Menge des Emulsionspolymerisats) des Weichmachers sind besonders geeignet. Da der Zweck des Weichmachers gewöhnlich darin besteht, die Filmbildung zu erleichtern, aber es nicht immer notwendig ist, die Copolymerisatzubereitung flexibel zu gestalten, wenn sie - nicht weichgemacht - selbst zäh und flexibel ist, wird ein flüchtiger oder halbflüchtiger (temporärer) Weichmacher manchmal anstelle eines permanenten Weichmachers bevorzugt. Jedoch können aber auch permanente Weichmacher verwendet werden, ohne daß dabei Filme mit einer schlechten Abriebbeständigkeit oder einer schlechten Wasserbeständigkeit erhalten werden, da die Menge des eingeführten Weichmachers in den meisten Fällen relativ gering und im allgemeinen nicht oberhalb von 30 Gew.-% (bez. auf die Emulsionspolymerisate) liegt. Mischungen aus flüchtigen und permanenten Weichmachern können ebenfalls verwendet werden. Der jeweils verwendete Weichmacher, gegebenenfalls eine beliebige Mischung mehrerer Weichmacher, sowie die Menge, in der Weichmacher zugesetzt wird, werden je nach der Verträglichkeit sowie im Hinblick auf die Wirksamkeit der Herabsetzung der Filmbildetemperatur ausgewählt.

Beispiele für flüchtige Weichmacher sind die Monomethyl-, Monoethyl- oder Monobutylether von Diethylenglykol, Triethylenglykol, Dipropylenglykol und Tripropylenglykol sowie Benzylalkohol, Isophoron und Methoxybutanol. Beispiele für permanente Weichmacher sind reine oder gemischte Diester der Phthalsäure mit Benzylalkohol, Butanol, Hexanol, 2-Ethylhexanol, Cyclohexanol oder Octanol als Alkoholkomponente, desweiteren reine oder gemischte Benzoesäure- und Fettsäureester von ein- oder mehrwertigen Alkoholen wie Pentaerythrit, Glykolen und Propylenglykolen. Beispiele hierfür stellen Polypropylenglykoladipatbenzoat, Diethylenglykoldibenzoat, Dibenzylsebacat, Acetyltributylcitrat oder Butylphthalatbutylglykolat dar. Eine strukturell gesonderte Klasse bilden Triphenylphosphat, Tributylphosphat und Tributoxyethylphosphat. Tributoxyethylphosphat dient häufig auch als Verlaufsmittel.

Da die erfindungsgemäßen Beschichtungsmittelformulierungen schon in der Regel gute bis ausgezeichnete Verlaufseigenschaften aufweisen, kann in den meisten Fällen auf ein Verlaufshilfsmittel oder ein verlaufsförderndes Additiv verzichtet werden.

Den erfindungsgemäßen Formulierungen können zusätzlich zweiwertige Metallionen in Form von Oxiden, Hydroxiden, basischen Salzen oder löslichen Komplexen zugesetzt werden, um beispielsweise einen Vernetzungseffekt zu erzielen. Es handelt sich hierbei insbesondere um Calcium-, Magnesium- oder Zinkionen.

Die erfindungsgemäßen Formulierungen eignen sich in erster Linie zur Herstellung von klaren und glänzenden Filmen bzw. Überzügen. Gewünschtenfalls kann jedoch auch ein trübes oder gefärbtes Aussehen erzielt werden, und zwar durch die Mitverwendung von Mattierungsmitteln, wasser- oder öllöslichen Farbstoffen, Pigmenten oder Füllstoffen, die dem Fachmann hinreichend bekannt sind.

Erfindungsgemäße Beschichtungsmittelformulierungen besitzen unter normalen Temperaturen eine gute Lagerstabilität. Bei tieferen Temperaturen, speziell unterhalb des Gefrierpunktes von Wasser, wirken die zugesetzten temporären Weichmacher auch als Frostschutzmittel, wobei bei Bedarf deren Gehalt erhöht werden kann oder mehrwertige Alkohole zugesetzt werden können.

Das Emulsionspolymerisat, das Wachs und gegebenenfalls das alkalilösliche Harz können in jeder beliebigen Reihenfolge abgemischt werden. Vorzugsweise wird das Emulsionspolymerisat einer Dispersion des Wachses zugesetzt, worauf gegebenenfalls das alkalilösliche Harz eingemischt wird.

Die gebrauchsfertige Formulierung kann in der üblichen Weise mittels Wischtücher und Mops, mit speziellen Beschichtungsmaschinen, durch Aufbürsten, -pinseln oder -schwämmen oder auch durch Eintauchen bzw. Aufsprühen aufgebracht bzw. verteilt werden. Sie trocknet schnell bei Raumtemperatur zu klaren oder gefärbten Filmen, sofern sie gefärbt oder pigmentiert wurde, wobei die Filme hart, zäh und klebfrei sind. Beim Altern tritt im allgemeinen keine Verfärbung der Filme auf. Die Aufbringung der Zubereitung auf Oberflächen, die schon zuvor aufgebrachte Überzüge aus alkalienentfernbaren Zubereitungen tragen, hat nicht die Entfernung merklicher Mengen derartiger Überzüge zur Folge. Auch wird die Viskosität oder Konsistenz der erfindungsgemäßen Formulierungen nicht in nachteiliger Weise beeinflußt. Die Zubereitungen verteilen sich gleichmäßig und streifenfrei auf der Oberfläche, ohne daß sich dabei Unregelmäßigkeiten bilden. Überzüge, die unter Verwendung der erfindungsgemäßen Zübereitungen aufgebracht worden sind, lassen sich in den meisten Fällen durch verdünnte, wäßrige leicht alkalische Lösungen entfernen.

Die beschriebene Emulsionspolymerisation führt zu koagulatärmeren und scherstabileren Polymerisatdispersionen sowie zu Beschichtungsmitteln, welche eine geringere Oberflächenklebrigkeit aufweisen, verglichen mit Polymerisatdispersionen, die unter alleiniger Verwendung von Sulfosuccinaten hergestellt worden sind. Die Verwendung von Sulfosuccinaten während der Polymerisation verleiht den Beschichtungsmitteln ein verbessertes Verlauf-Verhalten. Die Zuhilfenahme des zweiten anionischen Emulgators wirkt sich synergistisch aus: man erhält stabilere Dispersionen, die zu weniger klebenden Beschichtungsmitteln führen, aber diesen einen gute Verlaufsqualität verleihen.

Eine höhere Oberflächenklebrigkeit zieht eine verstärkte Schmutzannahme nach sich. Um anschmutzresistentere und zugleich härtere, d.h. strapazierfähigere Beschichtungen zu erhalten, die sich leicht durch alkalische Reiniger wieder entfernen lassen, ist es üblich, Metallsalze, insbesondere Zinksalze, den Formulierungen zuzusetzen. Die beschriebenen Polymerisatdispersionen werden durch den hohen Anteil an copolymerisierter Säure und der hohen, zu ihrer Herstellung verwendeten Initiatormenge zusätzlich stabilisiert und führen zu Beschichtungsmitteln mit geeigneter Mindestfilmbildetemperatur und Härte, so daß daher auf den Zusatz von Metallsalzen weitgehend verzichtet werden kann. Der hohe Säuregehalt ermöglichst es zudem, mit alkalischen Reinigern die Beschichtung anzulösen und zu redispergieren, d.h. zu entfernen.

Ein weiterer Vorteil der erfindungsgemäßen Beschichtungsmittelformulierungen ist die Verzichtbarkeit auf Verlaufshilfsmittel, z.B. teil- oder perfluorierte Tenside oder Silicontenside, bei der Herstellung der Beschichtungsmittelformulierungen. Trotzdem weisen die erfindungsgemäßen Beschichtungsmittelformulierungen gute Verlauf-Eigenschaften auf, d.h. die zu beschichtenden Substrate werden gleichmäßig, streifenfrei und zusammenhängend überzogen.

### Beispiele

Soweit nichts anders angegeben ist, beziehen sich die Prozentangaben und die Angabe von Teilen auf das Gewicht. Unter Natriumlaurylethersulfat ist in den Beispielen das Umsetzungsprodukt mit 2 bis 3 mol Ethylenoxid zu verstehen.

### Herstellung der Polymerisatdispersionen

### Beispiel 1

Eine Lösung aus 650 g Wasser und 7,2 g Natrium-Bis(2-ethylhexyl)sulfosuccinat (60%ig) wurde unter Schutzgas auf eine Polymerisationstemperatur von 85°C erhitzt. Bei Erreichen einer Innentemperatur von 70°C wurden 26 g einer Lösung von 19,2 g Natriumperoxodisulfat in 240 g Wasser zugegeben und nach 5 Minuten wurde begonnen, unter konstantem Rühren innerhalb von 2 h die Monomeremulsion El und innerhalb von 3,25 h den Rest der Peroxodisulfatlösung kontinuierlich zuzuführen. Nach vollständiger Zufuhr wurde 1 h bei Polymerisationstemperatur nachpolymerisiert und auf Raumtemperatur abgekühlt. Die resultierende Dispersion wurde durch einen engmaschigen Filter (Porengröße 0,12 mm) abgelassen und der Koagulatanteil gravimetrisch bestimmt (<0,1 %). Die Dispersion war leicht stippenhaltig und wies eine Oberflächenspanung von 34,1 mN/m auf. Die mittlere Teilchengröße betrug ca. 80 nm (Lichtstreuung, Ultrazentrifuge), die Lichtdurchlässigkeit einer auf 0,01 Gew.-% verdünnten Probe betrug 94 %. Die Dispersion wurde in einem offenen Behälter unter Rühren langsam im Laufe von 15 min mit wäßrigem Ammoniak auf einen pH-Wert von ca. 8 eingestellt und so zur weiteren Prüfung verwendet.

### Zusammensetzung von E1:

| | | |
|---|---|---|
| 36,0 % | 432 g | Styrol |
| 30,0 % | 360 g | n-Butylacrylat |
| 20,0 % | 240 g | Methylmethacrylat |
| 14,0 % | 168 g | Methacrylsäure |
| | 64,2 g | Natrium-Laurylethersulfat (28%ig) |
| | 18,0 g | Bis(2-ethylhexyl)sulfosuccinat, Natriumsalz |
| | 14,4 g | Natronlauge (25%ig) |
| | 844 g | Wasser |

### Beispiel 2

Zu einem Gemisch aus 650 g Wasser, 10,2 g Natrium-Bis(tridecyl)sulfosuccinat (Aerosol® TR-70, Hersteller: Cyanamid) (70%ig) wurde unter Reaktionsbedindungen, wie sie unter Beispiel 1 beschrieben sind, eine Monomeremulsion zugefahren, die als Emulgiermittel neben 64,2 g Natrium-Laurylethersulfat noch 25,7 g Natrium-Bis(tridecyl)sulfosuccinat (70%ig) enthielt. Die Dispersion war stippenfrei und koagulatarm (0,8 %) und wies eine Oberflächenspannung von 28,2 mN/m auf.

### Beispiel 3

Die Herstellung erfolgte analog Beispiel 2, jedoch mit dem Unterschied, daß aus der Gesamtmenge an Emulgiermittel 21,4 g Natrium-Laurylethersulfat (28%ig) herausgenommen und in 640 g Wasser vorgelegt wurden. Die Dispersion war koagulatarm (0,3 %) und stippenfrei; die Oberflächenspannung betrug 34,0 mN/m.

### Beispiel 4

Die Herstellung erfolgte analog Beispiel 1, jedoch mit dem Unterschied, daß eine Monomeremulsion erstellt wurde, die 18 g Natriumlaurylsulfat (1,5 %), 18 g des Na-Salzes von Bis(2-ethylhexyl)sulfosuccinat (1,5 %) und 4,8 g Natronlauge (25%ig) enthielt. Die Dispersion war koagulatarm (0,1 %), stippenfrei und wies eine Oberflächenspannung von 38,7 mN/m auf.

### Beispiel 5

Die Herstellung erfolgte analog Beispiel 1, jedoch mit dem Unterschied, daß eine Monomeremulsion erstellt wurde, die 18 g Natrium-Bis(2-ethylhexyl)sulfosuccinat (1,5 %), 18 g des Na-Salz des C₁₈-Fettsäurealkoholsulfates (1,5 %) und 4,8 g Natronlauge (25%ig) enthielt. Die Dispersion war koagulatarm (0,1 %), stippenarm und wies eine Oberflächenspannung von 40,0 mN/m auf.

### Beispiel 6

Die Herstellung erfolgte analog Beispiel 1, jedoch mit dem Unterschied, daß der Anteil an Sulfosuccinat verdoppelt wurde (36 g). Die erhaltene Dispersion war koagulatarm (0,1 %) und stippenfrei.

### Beispiel 7

400 g der Dispersion aus Beispiel 6 wurden 12 g einer zinkhaltigen, ammoniakalischen Styrol-Acrylsäure-Additionspolymerisatharzlösung (Gew.-Verhältnis 50:50) zugesetzt, welche einen Feststoffanteil von 20 % und einen Zinkgehalt von 10 % aufwies.

### Beispiel 8

Die Herstellung erfolgte analog Beispiel 3, jedoch wurde die Monomeremulsion mit 72 g Dinatrium-N-Octadecyl-sulfosuccinamat (Aerosol® 18, Hersteller: Cyanamid, 35%ig) und 42,8 g Natrium-Laurylethersulfat angesetzt. Die erhaltene Dispersion war koagulatfrei (0,01 %), stippenfrei und wies eine Oberflächenspannung von 46,2 mN/m auf.

### Beispiel 9

Beispiel 1 wurde in abgeänderter Weise wiederholt: Unter Reaktionsbedingungen wurde zu einer vorgelegten Lösung von 6,6 g Natrium-Bis(2-ethylhexyl)sulfosuccinat in 383 g Wasser die Monomeremulsion E9 zugefahren. Die erhaltene Dispersion war stippenfrei und koagulatarm (0,07 %).

### Zusammensetzung von E9:

| | | |
|---|---|---|
| 40,0 % | 240 g | Styrol |
| 30,0 % | 180 g | n-Butylacrylat |
| 16,0 % | 96 g | Methylmethacrylat |
| 14,0 % | 84 g | Methacrylsäure |
| | 32,1 g | Natrium-Laurylethersulfat (28%ig) |
| | 6,0 g | Bis(2-ethylhexyl)sulfosuccinat, Natriumsalz |
| | 0,9 g | Calciumhydroxid |
| | 475,0 g | Wasser |

### Beispiel 10

Die Herstellung erfolgte analog Beispiel 1 mit folgenden Unterschieden: Die Monomermischung wurde mit einem Gemisch aus 18 g Natrium-Bis(2-ethylhexyl)sulfosuccinat und 120 g des Natriumsalzes von n-Dodecylbenzolsulfonsäure (15%ig, 1,5 %) unter Zusatz von 4,8 g Natronlauge (25%ig) emulgiert. Die erhaltene Dispersion war koagulatarm (0,15 %), gut filtrierbar und stippenfrei. Die Obeflächenspannung wurde zu 38,6 mN/m bestimmt.

### Beispiel 11

Eine Dispersion wurde analog Beispiel 1 hergestellt, jedoch mit dem Unterschied, daß die gesamte Menge an Sulfosuccinat vorgelegt wurde und die Monomeremulsion ausschließlich Natrium-Laurylethersulfat als Emulgiermittel enthielt.

### Beispiel 12

Unter Verwendung von Monomeremulsion E12 wurde analog Beispiel 1 eine Dispersion hergestellt. Die erhaltene Dispersion war koagulatarm (<0,1 %) und stippenfrei. Die Viskosität betrug bei pH 8 ca.63 mPas.

### Zusammensetzung von E12:

| | | |
|---|---|---|
| 36,0 % | 432 g | Methylmethacrylat |
| 30,0 % | 360 g | n-Butylacrylat |
| 20,0 % | 240 g | Styrol |
| 14,0 % | 168 g | Methacrylsäure |
| | 64,2 g | Natrium-Laurylethersulfat (28%ig) |
| | 30,0 g | Natrium-Bis(2-ethylhexyl)sulfosuccinat (60%ig) |
| | 14,4 g | Natronlauge (25%ig) |
| | 832,0 g | Wasser |

### Beispiel 13

Beispiel 1 wurde nachgearbeitet, jedoch mit folgenden Unterschieden: unter Reaktionsbedingungen wurde zu einer vorgelegten Emulgatorlösung aus 20,0 g Natrium-Bis(2-ethylhexyl)sulfosuccinat (60%ig, 1 % bezogen auf Monomere) in 700 g Wasser im Laufe von 2 h die Monomeremulsion E13 zugefahren.

### Zusammensetzung von E13:

| | | |
|---|---|---|
| 35,5 % | 426 g | Styrol |
| 28,0 % | 336 g | n-Butylacrylat |
| 20,0 % | 240 g | Methylmethacrylat |
| 15,0 % | 180 g | Methacrylsäure |
| 1,0 % | 12 g | Acrylamidomethylpropansulfonsäure |
| 0,5 % | 6 g | Butan-1,4-diol-bis(acrylat) |
| | 64,2 g | Natrium-Laurylethersulfat (28%ig) |
| | 22,2 g | Bis(2-ethylhexyl)sulfosuccinat, Natriumsalz (60%ig) |
| | 14,4 g | Natronlauge (25%ig) |
| | 880,0 g | Wasser |

### Vergleichsbeispiel A

Analog Beispiel 1 wurde eine Dispersion hergestellt unter ausschließlicher Verwendung von Natrium-Bis(2-ethylhexyl)sulfosuccinat (3,6 %) als Emulgiermittel und 2,4 g Natronlauge (25 %ig). Es wurde eine stippenfreie, wenig stabile und koagulatreiche (12 %) Polymerdispersion erhalten.

### Vergleichsbeispiel B

Als Vergleichsbeispiel B wurde die Selbstglanzemulsion A aus (2) nachgestellt.

### Vergleichsbeispiel C

Als Vergleichsbeispiel C wurde das Beispiel 1 aus (3) nachgestellt.

### Vergleichsbeispiel D

Als Vergleichsbeispiel D wurde das Vergleichsbeispiel A aus (3) nachgestellt.

### Vergleichsbeispiel E

Als Vergleichsbeispiel E wurde das Beispiel 1 aus (1) nachgearbeitet mit der Änderung, daß als Polymerzusammensetzung diejenige des erfindungsgemäßen Beispiels E1 gewählt und als Emulgiermittel ausschließlich Natriumlaurylethersulfat verwendet wurde.

Tabelle 1 zeigt die Kenndaten der erhaltenen Dispersionen.

**Tabelle 1**

| Kenndaten der erhaltenen Dispersionen | | | | | |
|---|---|---|---|---|---|
| Bsp. Nr. | pH-Wert | Lichtdurchlässigkeit einer 0,01%igen wäßrigen Lösung [%] | Oberflächenspannung (Lauda-Ring-Tensiometer, 20°C) [mN/m] | Viskosität (Auslaufzeit Ford-Becher, 4 mm) [s] | Mindestfilmbilde-Temperatur (DIN 53 785) [°C] |
| 1 | 4,3 | 94 | 34,1 | 15 | 59 |
| 2 | 3,6 | 65 | 28,2 | - | - |
| 3 | 4,2 | 95 | 34,0 | 15 | 58 |
| 4 | 2,1 | 94 | 38,7 | 13 | 50 |
| 5 | 2,1 | 90 | 40,0 | 13 | 60 |
| 6 | 4,2 | 94 | - | 15 | 60 |
| 7 | - | - | - | 15 | 57 |
| 8 | 4,6 | 94 | 46,2 | 15 | 47 |
| 9 | 4,5 | 92 | - | - | - |
| 10 | 2,1 | 95 | 38,6 | 13 | 52 |
| 11 | 4,1 | 90 | 31,4 | 13 | 60 |
| 12 | 3,6 | 93 | - | 15 | 51 |
| 13 | 2,5 | 95 | - | 15 | 62 |
| A | 2,3 | 94 | - | 14 | 58 |
| B | 1,9 | 95 | 45,5 | 12 | 59 |
| C | 2,0 | 74 | 33,0 | 27 | 53 |
| D | 1,8 | 51 | - | 28 | 54 |
| E | 2,1 | 96 | - | 15 | 60 |

Anwendungstechnische Prüfungen

Die hergestellten und auf pH 8 neutralisierten Polymerisatdispersionen wurden jeweils nach folgender Rezeptur zu einer Fußbodenpflegepolitur formuliert und nach Zusammenmischen 1 Stunde gerührt:

| | |
|---|---|
| Polymerisatdispersion aus Bsp. 1-15,A | 40 Teile |
| Dispersion eines sauerstoffhaltigen Polyethylenwachses (Poligen® WE1) | 8 Teile |
| Ethylenglykolmonomethylether | 5 Teile |
| Tributoxyethylphosphat | 1,5 Teile |
| Wasser | 45,5 Teile |

Die labormäßige Prüfung der Formulierungen und deren Beurteilungen nach DIN 53230 sind im folgenden beschrieben, wobei als Bewertungsskala Noten von 5 (exzellent) bis 1 (sehr schlecht) vergeben wurden.

### 1) Glanz:

Eine unbenutzte und zuvor mit Alkohol gereinigte PVC-Platte (Größe 30 x 50 cm, Typ Dessin weiß 1310 der Fa. Dynamit Nobel) wurde mit einer Gesamtmenge von 15 ml Formulierung/m² zweimal beschichtet. Die Beschichtung erfolgte durch bahnenweises Auftragen der Formulierung mittels eines Pinsels (Größe 2 Zoll, Typ: reine Borsten Haarpinsel). Der Glanz wurde mit einem Glanzmeßgerät (Meßwinkel 85°) der Firma BYK-Gardner (Typ Mikro-TRI-gloss) ermittelt und stellte den arithmetischen Mittelwert von 6 Messungen an unterschiedlichen Stellen der Beschichtung dar.

### 2) Begehfestigkeit und Anschmutzung:

Die beschichteten und getrockneten Platten (gemäß Punkt 1) wurden in einem Raum auf dem Fußboden ausgelegt, daß sie pro Tag durchschnittlich etwa 500-600 mal begangen wurden. Nach 3 Wochen Auslagezeit erfolgte eine Beurteilung.

### 3) Verlauf:

Eine unbenutzte und zuvor mit Alkohol gereinigte PVC-Platte (Größe 15 x 35 cm, Typ PVC-Tischbelag unigrün Nr. 1911 der Fa. Dynamit Nobel) wurde mit einer Gesamtmenge von 15 ml Formulierung/m² zweimal wie unter Punkt 1 beschrieben beschichtet. Abschließend wurde kreuzförmig aufgetragen. Nach Verfilmung und Trocknung wurde der Verlauf visuell beurteilt, indem insbesonders nach (kreuzförmigen) Streifenbildung oder wolkigen Verlaufstörungen Ausschau gehalten wurde.

### 4) Klebrigkeit:

Eine unbenutzte und zuvor mit Alkohol gereinigte PVC-Platte (Größe 8 x 8 cm, Typ Tischbelag unigrün Nr. 1911 der Fa. Dynamit Nobel) wurde gewogen und mit einer Gesamtmenge von 15 ml Formulierung/m² zweimal wie unter Punkt 1 beschrieben beschichtet und anschließend 30 Minuten in einem Trockenschrank bei 40°C getrocknet. Die trockene Platte wurde mit 500 mg Quarzsand (feinkörnig, gewaschen und geglüht) gleichmäßig bestreut und eine Minute lang mit einem Gewicht von 2 kg belastet. Der nichthaftende Quarzsand wurde vorsichtig abgeklopft und das PVC-Stück erneut gewogen. Die Differenz ergab die anhaftende Menge an Quarzsand und diente zur Ermittlung einer relativen Kennzahl der Klebrigkeit. Eine größere Kennzahl weist auf weniger klebende Beschichtungen hin.

### 5) Wasserfestigkeit:

Ein unbenutztes Stück Linoleum (Größe 17 x 35 cm, Typ Uniwalton Nr. 50 Grün, dünne Qualität) wurde durch zweimaligen Auftrag mit einer Menge von 15 ml Formulierung/m² beschichtet und 2 h trocknen gelassen. Ein 2,5 cm² großes Stück weißes Filtrierpapier wurde mit 0,2 ml destilliertem Wasser befeuchtet und auf die beschichtete Platte gelegt, angedrückt und trocknen gelassen. Die durch die Wasserbehandlung verursachte Redispergierung des Polymerfilmes, die sich durch eine Vergrauung der Oberfläche zu erkennen gab, wurde vergleichend beurteilt.

### 6) Alkoholfestigkeit:

Die Bestimmung erfolgte analog der Wasserfestigkeit mit dem Unterschied, daß die Beschichtung mit 0,05 ml einer 60%igen Ethanol/Wasser-Mischung befeuchtet und anschließend trocknen gelassen wurde.

### 7) Naßwischfestigkeit

Ein unbenutztes Stück Linoleum (Größe 17 x 35 cm, Typ Uniwalton Nr. 50 Grün, dünne Qualität) wurde durch zweimaligen Auftrag mit einer Menge von 15 ml Formulierung/m² beschichtet und 24 h trocknen gelassen. Der Test der Naßabriebfestigkeit erfolgte auf einer "Gardner Straight Line Washability and Abrasion Maschine" der Fa. Gardner Lab. Dabei wurde ein mit einer Testmischung befeuchteter Schwamm (Typ Viskose Schwamm) 1000 Zyklen (Hin- und Herstriche) über das beschichtete Linoleum gerieben. Die Testflüssigkeit bestand aus destilliertem Wasser. Beurteilt wurde die Naßwischfestigkeit des Polymerfilmes (die Note 5 bedeutet unveränderter Film, die Note 1 sehr schlechte Festigkeit).

### 8) Detergenzienfestigkeit:

Die Bestimmung erfolgte analog Punkt 7, jedoch mit dem Unterschied, daß die Testmischung aus einem seifenhaltigen, marktüblichen Fußbodenreiniger (Sofix® der Fa. Thompson) bestand, welcher im Gew.-Verhältnis 1:10 mit dest. Wasser verdünnt wurde.

### 9) Haft- und Gleitreibung:

Eine unbenutzte und zuvor mit Alkohol gereinigte PVC-Platte (Größe 30 x 50 cm, Typ Dessin weiß 1310 der Fa. Dynamit Nobel) wurde mit einer Gesamtmenge von 15 ml Formulierung/m² zweimal beschichtet. Auf dieser Beschichtung wurde die Haft- und Gleitreibung mit einem Testgerät (Typ: WWTG Ing. E. Becker) gemessen. Der Endwert ergab sich als arithmetisches Mittel zweier Messungen.

### 10) Wiederentfernbarkeit nach Alterung:

Ein unbenutztes Stück PVC der Größe 17 x 35 cm (Typ Milopan braun 4806 der Fa. Dynamit Nobel) wurde mit 15 ml/m² Formulierung zweimal beschichtet und 4 Wochen bei 50°C im Umlufttrockensachschrank gelagert. Danach wurde mittels der Gardner-Maschine(vgl. Punkt 7) die Wiederentfernbarkeit der Beschichtung getestet. Die Bestimmungen erfolgten nach 4 Wochen bei 50°C jeweils nach 50 oder 100 Zyklen. Als Testlösung diente hierzu ein marktüblicher Grundreiniger (Rax® der Fa. Erdal oder Sigofix® der Fa. Henkel). Die Beurteilung erfolgte in der Weise, daß vollständig entfernte Beschichtungen mit der Note 5 ausgezeichnet wurden, und mit der Note 1 solche, die unverändert vorlagen.

Tabelle 2 zeigt die Ergebnisse der anwendungstechnischen Prüfungen.

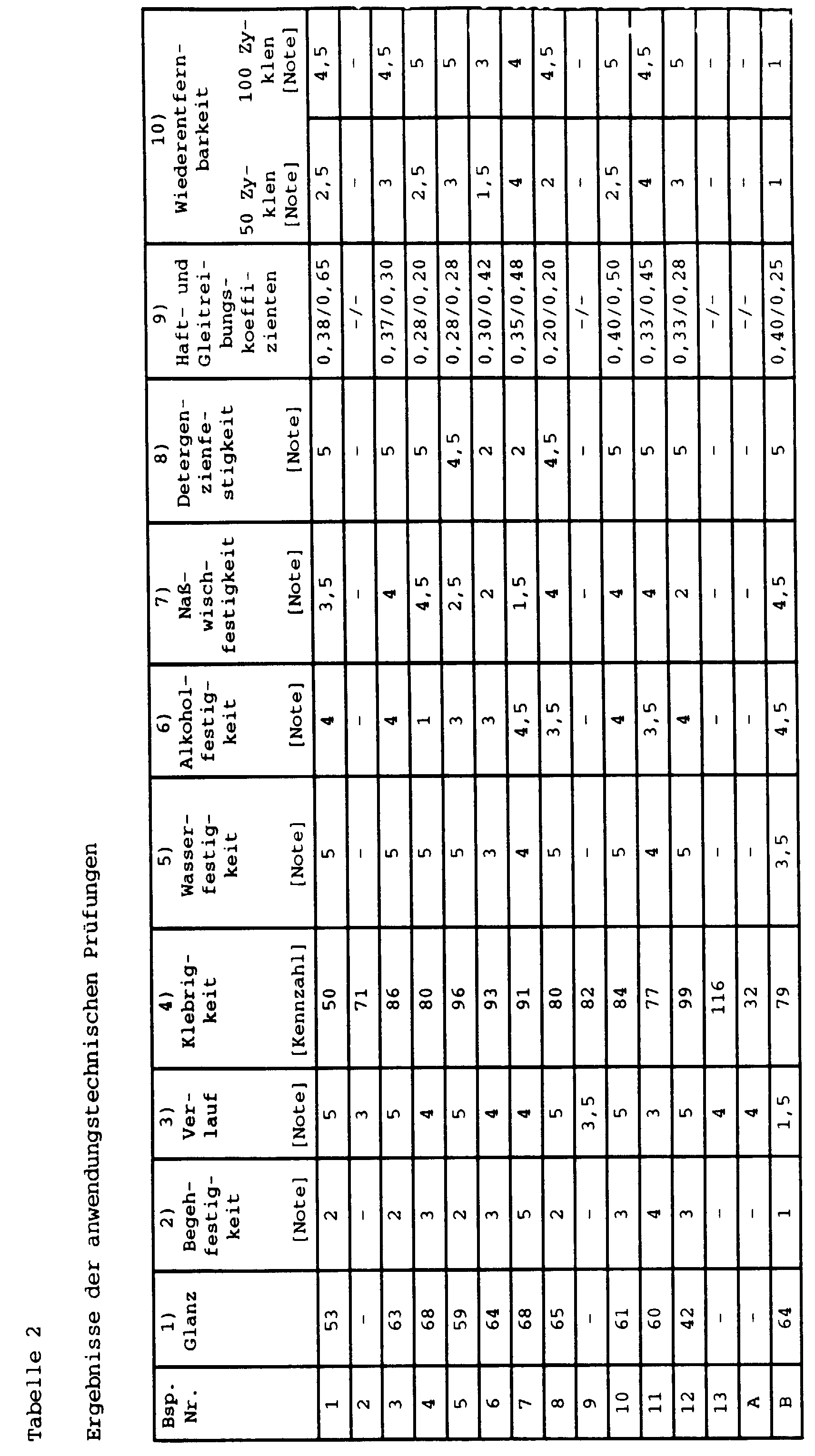

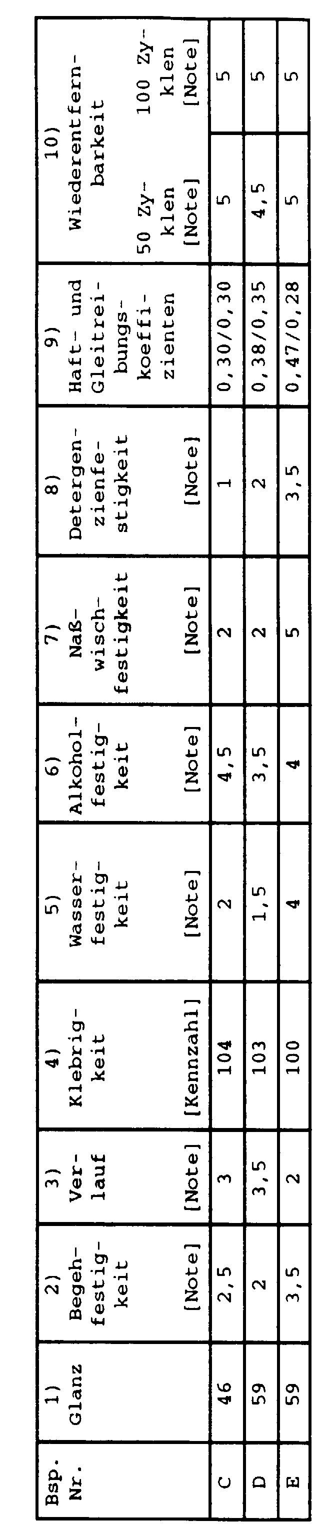

## Patentansprüche

1. Beschichtungsmittel, enthaltend ein Emulsionspolymerisat, erhältlich durch radikalisch initiierte Emulsionspolymerisation einer Monomerenmischung aus
A) 15 bis 60 Gew.-% eines Acrylsäureesters mit einer primären oder sekundären C₁- bis C₁₈-Alkylgruppe, welche durch Sauerstoffatome unterbrochen sein kann, als Alkoholrest (Monomer I), eines Methacrylsäureesters mit einer primären oder sekunkären C₅- bis C₁₈-Alkylgruppe, welche durch Sauerstoffatome unterbrochen sein kann, als Alkoholrest (Monomer II) oder einer Mischung solcher Monomeren,
B) 15 bis 50 Gew.-% eines Acrylsäure- oder Methacrylsäureesters mit einer tertiären C₄- bis C₈-Alkylgruppe als Alkoholrest (Monomer III), eines Acrylsäure- oder Methacrylsäureesters mit einem aus einer alicyclischen oder aromatischen Gruppe bestehenden oder eine alicyclische oder aromatische Gruppe enthaltenden C₆- bis C₁₂-Alkoholrest (Monomer IV), eines Methacrylsäureesters mit einer primären oder sekundären C₁- bis C₄-Alkylgruppe als Alkoholrest (Monomer V), Acrylsäure- oder Methacrylsäurenitril (Monomer VI), Acrylsäure- oder Methacrylsäureamid (Monomer VII), eines Vinylesters einer C₁- bis C₈-Carbonsäure (Monomer VIII) oder einer Mischung solcher Monomeren,
C) 10 bis 50 Gew.-% eines oder mehrerer C₈- bis C₁₂-Vinylaromaten (Monomer IX),
D) 8 bis 20 Gew.-% einer olefinisch ungesättigten C₃- bis C₅-Mono- oder C₄- bis C₈-Dicarbonsäure oder deren Anhydride (Monomer X) oder einer Mischung solcher Monomeren und
E) 0 bis 5 Gew.-% weiterer copolymerisierbarer Monomerer mit funktionellen Gruppen (Monomere XI)
in Gegenwart von 0,1 bis 10 Gew.-%, bezogen auf die Monomerenmischung aus A bis E, einer Emulgatorenmischung aus
(a) einem oder mehreren Sulfobernsteinsäure-Derivaten der allgemeinen Formel I 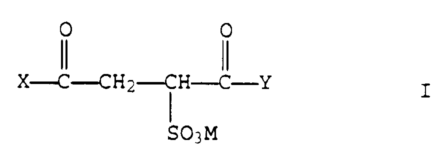 in der
M Alkalimetall oder Ammonium, welches durch ein bis vier C₁- bis C₄-Alkyl- oder C₁- bis C₄-Hydroxyalkylgruppen substituiert sein kann, bezeichnet und
X und Y gleich oder verschieden sind und jeweils für O-(CₙH₂ₙO)ₘ-R, OM oder NHR stehen, wobei wenigstens einer der Reste X oder Y für O-(CₙH₂ₙO)ₘ-R oder NHR steht, R C₆- bis C₁₈-Alkyl, C₆- bis C₁₈-Alkenyl, C₅- bis C₈-Cycloalkyl, (C₁- bis C₁₂-Alkyl) aryl oder Phenyl bedeutet, n für eine Zahl von 2 bis 4 und m für eine Zahl von 0 bis 30 steht,
(b) 0,1 bis 10 Gew.-Teilen pro Gew.-Teil (a) mindestens eines weiteren anionischen Emulgators und
(c) 0 bis 10 Gew.-Teilen pro Gew.-Teil (a) eines oder mehrerer nichtionischer Emulgatoren.

2. Beschichtungsmittel nach Anspruch 1, bei dem das Emulsionspolymerisat erhältlich ist durch radikalisch initiierte Emulsionspolymerisation einer Monomerenmischung aus
A) 15 bis 60 Gew.-% n-Butylacrylat,
B) 15 bis 50 Gew.-% Methylmethacrylat,
C) 10 bis 50 Gew.-% Styrol,
D) 8 bis 20 Gew.-% Acrylsäure oder Methacrylsäure oder einer Mischung hieraus und
E) 0 bis 5 Gew.-% weiterer copolymerisierbarer Monomerer mit funktioneller Gruppen.

3. Beschichtungsmittel nach Anspruch 1 oder 2, bei dem das Emulsionspolymerisat erhältlich ist durch radikalisch initiierte Emulsionspolymerisation in Gegenwart einer Emulgatorenmischung, die als Emulgatorkomponente (a) das Alkalimetallsalz eines α-Sulfobernsteinsäure-di(C₆- bis C₁₈-alkyl)esters oder das Dialkalimetallsalz eines N-(C₆- bis C₁₈-Alkyl)-sulfosuccinamats enthält.

4. Beschichtungsmittel nach den Ansprüchen 1 bis 3, bei dem das Emulsionspolymerisat erhältlich ist durch radikalisch initiierte Emulsionspolymerisation in Gegenwart einer Emulgatorenmischung, die als Emulgatorkomponente (b) Alkalimetall- oder Ammoniumsalze von C₆- bis C₁₈-Alkyl-, (C₆- bis C₁₈-Alkyl) aryl- oder α-Methylestersulfonaten, -sulfaten oder -polyethersulfaten sowie den entsprechenden Phosphaten oder Phosphonaten oder C₆- bis C₁₈-Alkyl-diphenyloxid-disulfonaten oder Mischungen hieraus enthält.

5. Verfahren zur Herstellung eines als Beschichtungsmittel geeigneten Emulsionspolymerisates, dadurch gekennzeichnet, daß man eine Monomerenmischung aus
A) 15 bis 60 Gew.-% eines Acrylsäureesters mit einer primären oder sekundären C₁- bis C₁₈-Alkylgruppe, welche durch Sauerstoffatome unterbrochen sein kann, als Alkoholrest (Monomer I), eines Methacrylsäureesters mit einer primären oder sekundären C₅- bis C₁₈-Alkylgruppe, welche durch Sauerstoffatome unterbrochen sein kann, als Alkoholrest (Monomer II) oder einer Mischung solcher Monomeren,
B) 15 bis 50 Gew.-% eines Acrylsäure- oder Methacrylsäureesters mit einer tertiären C₄- bis C₈-Alkylgruppe als Alkoholrest (Monomer III), eines Acrylsäure- oder Methacrylsäureesters mit einem aus einer alicyclischen oder aromatischen Gruppe bestehenden oder eine alicyclische oder aromatische Gruppe enthaltenden C₆- bis C₁₂-Alkoholrest (Monomer IV), eines Methacrylsäureesters mit einer primären oder sekundären C₁- bis C₄-Alkylgruppe als Alkoholrest (Monomer V), Acrylsäure- oder Methacrylsäurenitril (Monomer VI), Acrylsäure- oder Methacrylsäureamid (Monomer VII), eines Vinylesters einer C₁- bis C₈-Carbonsäure (Monomer VIII) oder einer Mischung solcher Monomeren,
C) 10 bis 50 Gew.-% eines oder mehrerer C₈- bis C₁₂-Vinylaromaten (Monomer IX),
D) 8 bis 20 Gew.-% einer olefinisch ungesättigten C₃- bis C₅-Mono- oder C₄- bis C₈-Dicarbonsäure oder deren Anhydride (Monomer X) oder einer Mischung solcher Monomeren und
E) 0 bis 5 Gew.-% weiterer copolymerisierbarer Monomerer mit funktionellen Gruppen (Monomere XI)
in Gegenwart von 0,1 bis 10 Gew.-%, bezogen auf die Monomerenmischung aus A bis E, einer Emulgatorenmischung aus
(a) einem oder mehreren Sulfobernsteinsäure-Derivaten der allgemeinen Formel I 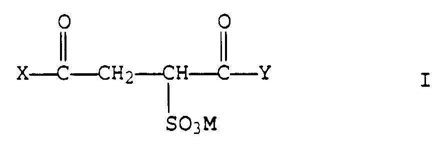 in der
M Alkalimetall oder Ammonium, welches durch ein bis vier C₁- bis C₄-Alkyl- oder C₁- bis C₄-Hydroxyalkylgruppen substituiert sein kann, bezeichnet und
X und Y gleich oder verschieden sind und jeweils für O-(CₙH₂ₙO)ₘ-R, OM oder NHR stehen, wobei wenigstens einer der Reste X oder Y für O-(CₙH₂ₙO)ₘ-R oder NHR steht, R C₆- bis C₁₈-Alkyl, C₆- bis C₁₈-Alkenyl, C₅- bis C₈-Cycloalkyl, (C₁- bis C₁₂-Alkyl)aryl oder Phenyl bedeutet, n für eine Zahl von 2 bis 4 und m für eine Zahl von 0 bis 30 steht,
(b) 0,1 bis 10 Gew.-Teilen pro Gew.-Teil (a) mindestens eines weiteren anionischen Emulgators und
(c) 0 bis 10 Gew.-Teilen pro Gew.-Teil (a) eines oder mehrerer nichtionischer Emulgatoren
radikalisch initiiert polymerisiert.

6. Beschichtungsmittelformulierung mit gutem Verlauf zur Beschichtung von harten und weichen Oberflächen, enthaltend neben hierfür üblichen Bestandteilen 1 bis 50 Gew.-%, bezogen auf den Polymerisatgehalt, eines oder mehrerer Beschichtungsmittel gemäß den Ansprüchen 1 bis 4.

7. Verwendung von Beschichtungsmitteln gemäß den Ansprüchen 1 bis 4 in Beschichtungsmittelformulierungen mit gutem Verlauf zur Beschichtung von harten und weichen Oberflächen.

8. Selbstglanzemulsionen zur Fußboden- und Schuhpflege, enthaltend neben hierfür üblichen Bestandteilen 1 bis 50 Gew.-%, bezogen auf den Polymerisatgehalt, eines oder mehrerer Beschichtungsmittel gemäß den Ansprüchen 1 bis 4.

9. Verwendung von Beschichtungsmitteln gemäß den Ansprüchen 1 bis 4 in Selbstglanzemulsionen zur Fußboden- und Schuhpflege.

## Claims

1. A coating agent comprising an emulsion polymer obtainable by free radical emulsion polymerization of a monomer mixture of
A) from 15 to 60% by weight of an acrylic ester having a primary or secondary C₁-C₁₈-alkyl group, which may be interrupted by oxygen atoms, as alcohol radical (monomer I), a methacrylic ester having a primary or secondary C₅-C₁₈-alkyl group, which may be interrupted by oxygen atoms, as alcohol radical (monomer II), or a mixture thereof,
B) from 15 to 50% by weight of an acrylic or methacrylic ester having a tertiary C₄-C₈-alkyl group as alcohol radical (monomer III), an acrylic or methacrylic ester having a C₆-C₁₂-alcohol radical that is an alicyclic or aromatic group or contains an alicyclic or aromatic group (monomer IV), a methacrylic ester having a primary or secondary C₁-C₄-alkyl group as alcohol radical (monomer V), acryloor methacrylonitrile (monomer VI), acryl- or methacrylamide (monomer VII), a vinyl ester of a C₁-C₈-carboxylic acid (monomer VIII) or a mixture thereof,
C) from 10 to 50% by weight of one or more C₈-C₁₂-aromatic vinyl compounds (monomer IX),
D) from 8 to 20% by weight of an olefinically unsaturated C₃-C₅-mono- or C₄-C₈-dicarboxylic acid or anhydride (monomer X) or a mixture thereof, and
E) from 0 to 5% by weight of further copolymerizable monomers having functional groups (monomers XI)
in the presence of from 0.1 to 10% by weight, based on the monomer mixture of A to E, of an emulsifier mixture of
(a) one or more sulfosuccinic acid derivatives of the general formula I 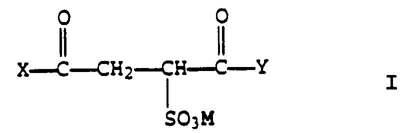 where
M is an alkali metal or ammonium which may be substituted by from one to four C₁-C₄-alkyl or C₁-C₄-hydroxyalkyl groups, and
X and Y are identical or different and each is O-(CₙH₂ₙO)ₘ-R, OM or NHR, wherein at least one of the radicals X and Y is O-(CₙH₂ₙO)ₘ-R or NHR, R is C₆-C₁₈-alkyl, C₆-C₁₈-alkenyl, C₅-C₈-cycloalkyl, (C₁-C₁₂-alkyl)aryl or phenyl, n is from 2 to 4, and m is from 0 to 30,
(b) from 0.1 to 10 parts by weight per part by weight of (a) of at least one further anionic emulsifier, and
(c) from 0 to 10 parts by weight per part by weight of (a) of one or more nonionic emulsifiers.

2. A coating agent as claimed in claim 1, wherein the emulsion polymer is obtainable by free radical emulsion polymerization of a monomer mixture of
A) from 15 to 60% by weight of n-butyl acrylate,
B) from 15 to 50% by weight of methyl methacrylate,
C) from 10 to 50% by weight of styrene,
D) from 8 to 20% by weight of acrylic acid, methacrylic acid or a mixture thereof, and
E) from 0 to 5% by weight of further copolymerizable monomers having functional groups.

3. A coating agent as claimed in claim 1 or 2, wherein the emulsion polymer is obtainable by free radical emulsion polymerization in the presence of an emulsifier mixture including as emulsifier component (a) the alkali metal salt of a di(C₆-C₁₈-alkyl) α-sulfosuccinate or the dialkali metal salt of an N-(C₆-C₁₈-alkyl)sulfosuccinamate.

4. A coating agent as claimed in any of claims 1 to 3, wherein the emulsion polymer is obtainable by free radical emulsion polymerization in the presence of an emulsifier mixture including as emulsifier component (b) alkali metal or ammonium salts of C₆-C₁₈-alkyl, (C₆-C₁₈-alkyl)aryl or α-methyl ester sulfonates, sulfates or polyether sulfates and the corresponding phosphates or phosphonates or C₆-C₁₈-alkyl diphenyl oxide disulfonates or mixtures thereof.

5. A process for preparing an emulsion polymer suitable for use as coating agent, which comprises subjecting a monomer mixture of
A) from 15 to 60% by weight of an acrylic ester having a primary or secondary C₁-C₁₈-alkyl group, which may be interrupted by oxygen atoms, as alcohol radical (monomer I), a methacrylic ester having a primary or secondary C₅-C₁₈-alkyl group, which may be interrupted by oxygen atoms, as alcohol radical (monomer II), or a mixture thereof,
B) from 15 to 50% by weight of an acrylic or methacrylic ester having a tertiary C₄-C₈-alkyl group as alcohol radical (monomer III), an acrylic or methacrylic ester having a C₆-C₁₂-alcohol radical that is an alicyclic or aromatic group or contains an alicyclic or aromatic group (monomer IV), a methacrylic ester having a primary or secondary C₁-C₄-alkyl group as alcohol radical (monomer V), acryloor methacrylonitrile (monomer VI), acryl- or methacrylamide (monomer VII), a vinyl ester of a C₁-C₈-carboxylic acid (monomer VIII) or a mixture thereof,
C) from 10 to 50% by weight of one or more C₈-C₁₂-aromatic vinyl compounds (monomer IX),
D) from 8 to 20% by weight of an olefinically unsaturated C₃-C₅-mono- or C₄-C₈-dicarboxylic acid or anhydride (monomer X) or a mixture thereof, and
E) from 0 to 5% by weight of further copolymerizable monomers having functional groups (monomers XI)
to a free radical polymerization in the presence of from 0.1 to 10% by weight, based on the monomer mixture of A to E, of an emulsifier mixture of
(a) one or more sulfosuccinic acid derivatives of the general formula I 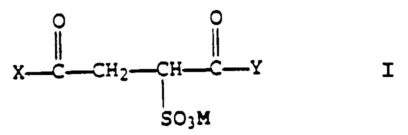 where
M is an alkali metal or ammonium which may be substituted by from one to four C₁-C₄-alkyl or C₁-C₄-hydroxyalkyl groups, and
X and Y are identical o r different and each is O-(CₙH₂ₙO)ₘ-R, OM or NHR, wherein at least one of the radicals X and Y is O-(CₙH₂ₙO)ₘ-R or NHR, R is C₆-C₁₈-alkyl, C₆-C₁₈-alkenyl, C₅-C₈-cycloalkyl, (C₁-C₁₂-alkyl)aryl or phenyl, n is from 2 to 4, and m is from 0 to 30,
(b) from 0.1 to 10 parts by weight per part by weight of (a) of at least one further anionic emulsifier, and
(c) from 0 to 10 parts by weight per part by weight of (a) of one or more nonionic emulsifiers.

6. A smooth leveling coating agent formulation for coating hard and soft surfaces, including in addition to customary constituents for this purpose from 1 to 50% by weight, based on the polymer content, of one or more coating agents as claimed in any of claims 1 to 4.

7. The use of coating agents as claimed in any of claims 1 to 4 in smooth leveling coating agent formulations for coating hard and soft surfaces.

8. Dry-bright emulsions for floor and shoe care including in addition to customary constituents for this purpose from 1 to 50% by weight, based on the polymer content, of one or more coating agents as claimed in any of claims 1 to 4.

9. The use of coating agents as claimed in any of claims 1 to 4 in dry-bright emulsions for floor and shoe care.

## Revendications

1. Agents d'enduction, contenant un produit de polymérisation en émulsion obtenu par polymérisation radicalaire en émulsion d'un mélange de monomères composé de
A) 15 à 60% en poids d'un ester d'acide acrylique comportant, en tant que reste alcool, un groupement alkyle en C₁-C₁₈ primaire ou secondaire qui peut être interrompu par des atomes d'oxygène (monomère I), d'un ester d'acide méthacrylique comportant, en tant que reste alcool, un groupement alkyle en C₅-C₁₈ primaire ou secondaire qui peut être interrompu par des atomes d'oxygène (monomère II), ou d'un mélange de tels monomères,
B) 15 à 50% en poids d'un ester d'acide acrylique ou d'acide méthacrylique comportant, en tant que reste alcool, un groupement alkyle en C₄-C₈ tertiaire (monomère III), d'un ester d'acide acrylique ou d'acide méthacrylique comportant un reste alcool en C₆-C₁₂ qui est constitué par un groupement alicyclique ou aromatique ou contient un groupement alicyclique ou aromatique (monomère IV), d'un ester d'acide méthacrylique comportant, en tant que reste alcool, un groupement alkyle en C₁-C₄ primaire ou secondaire (monomère V), d'acrylonitrile ou de méthacrylonitrile (monomère VI), d'acrylamide ou de methacrylamide (monomère VII), d'un ester vinylique d'un acide carboxylique en C₁-C₈ (monomère VIII) ou d'un mélange de tels monomères,
C ) 10 à 50% en poids d'un ou de plusieurs composés vinylaromatiques en C₈-C₁₂ (monomère IX),
D) 8 à 20% en poids d'un acide monocarboxylique en C₃-C₅ ou dicarboxylique en C₄-C₈ à insaturation oléfinique, de leurs anhydrides (monomère X) ou d' un mélange de tels monomères, et
E) 0 à 5% en poids d'autres monomères copolymérisables comportant des groupements fonctionnels (monomères XI),
en présence de 0,1 à 10% en poids, par rapport au mélange de monomères composé de A à E, d'un mélange d'émulsifiants composé de
a) un ou plusieurs dérivés d'acide sulfosuccinique de formule générale I 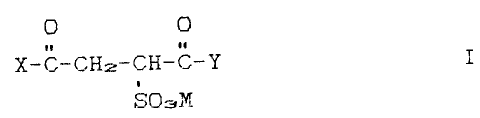 dans laquelle
M représente un atome de métal alcalin ou un groupement ammonium, qui peut être substitué par un à quatre groupements alkyle en C₁-C₄ ou hydroxyalkyle en C₁-C₄, et
X et Y sont identiques ou différents et sont mis chacun pour O-(CₙH₂ₙO)ₘ-R, OM ou NHR, l'un au moins des restes X et Y étant mis pour O-(CₙH₂ₙ-O)ₘ-R ou NHR, R représentant un groupement alkyle en C₆-C₁₈, alcényle en C₆-C₁₈, cycloalkyle en C₅-C₈, (alkyl en C₁-C₁₂)aryle ou phényle, n étant mis pour un nombre de 2 à 4 et m pour un nombre de 0 à 30,
b) 0,1 à 10 parties en poids, par partie en poids de (a), d'au moins un autre émulsifiant anionique, et
c) 0 à 10 parties en poids, par partie en poids de (a), d'un ou de plusieurs émulsifiants non ioniques.

2. Agent d'enduction selon la revendication 1, dans lequel le produit de polymérisation en émulsion est obtenu par polymérisation radicalaire en émulsion d'un mélange de monomères composé de
A) 15 à 60% en poids d'acrylate de n-butyle,
B) 15 à 50% en poids de méthacrylate de méthyle,
C) 10 à 50% en poids de styrène,
D) 8 à 20% en poids d'acide acrylique, d'acide méthacrylique ou d'un mélange de ceux-ci, et
E) 0 à 5% en poids d'autres monomères copolymérisables comportant des groupements fonctionnels.

3. Agent d'enduction selon la revendication 1 ou 2, dans lequel le produit de polymérisation en émulsion est obtenu par polymérisation radicalaire en émulsion en présence d'un mélange d'émulsifiants qui contient, en tant que composant émulsifiant (a), le sel alcalin d'un ester dialkylique en C₆-C₁₈ d'acide α-sulfosuccinique ou le sel dialcalin d'un N-(alkyl en C₆-C₁₈)-sulfosuccinamate.

4. Agent d'enduction selon l'une quelconque des revendications 1 à 3, dans lequel le produit de polymérisation en émulsion est obtenu par polymérisation radicalaire en émulsion en présence d'un mélange d'émulsifiants qui contient, en tant que composant émulsifiant (b), des sels alcalins ou d'ammonium d'(alkyl en C₆-C₁₈₎-, (alkyl en C₆-C₁₈)aryl- ou (ester α-méthylique)-sulfonates, sulfates ou -polyéthersulfates, ainsi que des phosphates ou phosphonates correspondants, des (alkyl en C₆-C₁₈) diphényloxyde disulfonates ou des mélanges de ces composés.

5. Procédé de préparation d'un produit de polymérisation en émulsion qui convient comme agent d'enduction, caractérisé en ce que l'on soumet à une polymérisation radicalaire un mélange de monomères composé de
A) 15 à 60% en poids d'un ester d'acide acrylique comportant, en tant que reste alcool, un groupement alkyle en C₁-C₁₈ primaire ou secondaire qui peut être interrompu par des atomes d'oxygène (monomère I), d'un ester d'acide méthacrylique comportant, en tant que reste alcool, un groupement alkyle en C₅-C₁₈ primaire ou secondaire qui peut être interrompu par des atomes d'oxygène (monomère II), ou d'un mélange de tels monomères,
B) 15 à 50% en poids d'un ester d'acide acrylique ou d'acide méthacrylique comportant, en tant que reste alcool, un groupement alkyle en C₄-C₈ tertiaire (monomère III), d'un ester d'acide acrylique ou d'acide méthacrylique comportant un reste alcool en C₆-C₁₂ qui est constitué par un groupement alicyclique ou aromatique ou contient un groupement alicyclique ou aromatique (monomère IV), d'un ester d'acide méthacrylique comportant, en tant que reste alcool, un groupement alkyle en C₁-C₄ primaire ou secondaire (monomère V) , d'acrylonitrile ou de méthacrylonitrile (monomère VI), d'acrylamide ou de méthacrylamide (monomère VII), d'un ester vinylique d'un acide carboxylique en C₁-C₈ (monomère VIII) ou d'un mélange de tels monomères,
C) 10 à 50% en poids d'un ou de plusieurs composés vinylaromatiques en C₈-C₁₂ (monomère IX),
D) 8 à 20% en poids d'un acide monocarboxylique en C₃-C₅ ou dicarboxylique en C₄-C₈ à insaturation oléfinique, de leurs anhydrides (monomère X) ou d'un mélange de tels monomères, et
E) 0 à 5% en poids d'autres monomères copolymérisables comportant des groupements fonctionnels (monomères XI),
en présence de 0,1 à 10% en poids, par rapport au mélange de monomères composé de A à E, d'un mélange d'émulsifiants composé de
a) un ou plusieurs dérivés d'acide sulfosuccinique de formule générale I 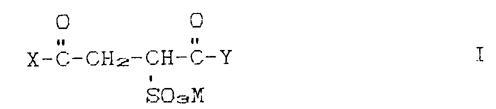 dans laquelle
M représente un atome de métal alcalin ou un groupement ammonium, qui peut être substitué par un à quatre groupements alkyle en C₁-C₄ ou hydroxyalkyle en C₁-C₄, et
X et Y sont identiques ou différents et sont mis chacun pour O-(Cₙ-H₂ₙO)ₘ-R, OM ou NHR, l'un au moins des restes X et Y étant mis pour O-(CₙH₂ₙO)ₘ-R ou NHR, R représentant un groupement alkyle en C₆-C₁₈, alcényle en C₆-C₁₈, cycloalkyle en C₅-C₈, (alkyl en C₁-C₁₂)aryle ou phényle, n étant mis pour un nombre de 2 à 4 et m pour un nombre de 0 à 30,
b) 0,1 à 10 parties en poids, par partie en poids de (a), d'au moins un autre émulsifiant anionique, et
c) 0 à 10 parties en poids, par partie en poids de (a), d'un ou de plusieurs émulsifiants non ioniques.

6. Composition d'agent d'enduction s'étalant bien pour le revêtement de surfaces dures et molles, contenant, en dehors de constituants usuels à cet égard, 1 à 50% en poids, par rapport à la teneur en polymères, d'un ou de plusieurs agents d'enduction selon l'une quelconque des revendications 1 à 4.

7. Utilisation d'agents d'enduction selon l'une quelconque des revendications 1 à 4 dans des compositions d'agent d'enduction s'étalant bien pour le revêtement de surfaces dures et molles.

8. Emulsions brillant spontanément pour l'entretien de planchers et de chaussures, contenant, en dehors de constituants usuels à cet égard, 1 à 50% en poids, par rapport à la teneur en polymères, d'un ou de plusieurs agents d'enduction selon l'une quelconque des revendications 1 à 4.

9. Utilisation d'agents d'enduction selon l'une quelconque des revendications 1 à 4 dans des émulsions brillant spontanément pour l'entretien de planchers et de chaussures.
